# FASCICULE DE BREVET EUROPEEN

(11) **EP 0 572 307 B1**
(45) Date de publication et mention de la délivrance du brevet: **26.11.1997**
(21) Numéro de dépôt: 93401325.1
(22) Date de dépôt: 24.05.1993
(51) Int. Cl.: G06F 11/20

(54) **Système logiciel à objets répliqués exploitant une messagerie dynamique, notamment pour installation de contrôle/commande à architecture redondante**
Einen dynamischen Nachrichtenservice verwendendes objektorientiertes Softwaresystem, besonders für eine Kontroll-/Steuer-Vorrichtung für eine redundante Architektur
Replicated object software system using a dynamic message service, especially for a control arrangement with a redundant architecture

(30) Priorité: 25.05.1992 FR 9206372
(43) Date de publication de la demande: 01.12.1993
(73) Titulaire: ALCATEL ALSTHOM COMPAGNIE GENERALE D'ELECTRICITE, 75008 Paris (FR)
(72) Inventeur: Baradel, Christophe, F-75013 Paris (FR); Eychenne, Yves, F-91470 Limours (FR); Kohen, Bruno, F-75012 Paris (FR)
(74) Mandataire: Pothet, Jean Rémy Emile Ludovic

(56) Documents cités:
- EP-A- 0 228 559
- FR-A- 2 561 410
- US-A- 4 958 270

## Description

L'invention porte sur un système logiciel pour installation de contrôle/commande à architecture redondante comprenant un premier processeur (1) relié par un réseau de communication (10) à un second processeur (1'), le système logiciel comprenant un premier programme à objets constitué de premiers objets destinés à être exécutés par le premier processeur, un second programme à objets constitué de second objets répliques de certains au moins des premiers objets et destinés à être exécutés par le second processeur, les seconds objets et lesdits certains premiers objets encapsulant des données, un moyen de mise à jour étant prévu pour maintenir une cohérence entre les données des seconds objets et les données desdits certains premiers objets lors de l'exécution desdits certains premiers objets.

Un programme à objets est particulièrement adapté à la diversité des fonctions de supervision d'une installation de contrôle/commande du fait de sa structure modulaire. Il existe aujourd'hui de nombreux langages de programmation à objets disponibles sur le marché qui permettent de réaliser des programmes pouvant comporter plusieurs milliers d'objets logiciels. Un objet logiciel encapsule classiquement des données et des méthodes opérant sur les données de l'objet.

Il est souhaitable et même souvent exigé qu'une installation de contrôle/commande industrielle soit tolérante aux fautes pour assurer une continuité de service.

Les techniques de redondances sont bien connues comme solution à la tolérance aux fautes.

Le brevet US4958270 décrit un système informatique à architecture redondante à deux processeurs exécutant des programmes qui ne sont pas forcément des programmes à objets. Le programme exécuté par le premier processeur manipule des données enregistrées dans une première base de données et le programme exécuté par le second processeur manipule des données enregistrées dans une seconde base de données. Il est aussi prévu un système de mise à jour pour maintenir une consistance entre la première base de données et la seconde base de données. Ce système de mise à jour est constitué par un programme exécuté par le second processeur de manière à:
- accomplir certaines opérations de commande réalisées par le premier processeur,
- mettre à jour la première base de données en réponse à l'accomplissement de ces certaines opérations,
- capturer des informations prédéterminées devant être enregistrées dans la première base de données simultanément avec sa mise à jour,
- transférer, dans le second processeur, les informations capturées pour la mise à jour de la seconde base de données.

Selon la technique de redondance décrite dans ce document, le second processeur est sollicité uniquement pour répercuter sur la seconde base de données les modifications intervenues sur la première bases de données. Le second processeur, ainsi déchargé d'une partie du traitement réalisé par le premier processeur, peut être exploité pour d'autres tâches. Cette technique de redondance est appelée redondance semi-active.

Le but de l'invention est de proposer une installation de contrôle/commande comprenant au moins deux processeurs exécutant en parallèle des programmes à objets selon une technique de redondance semi-active.

Les programmes à objets permettent de concentrer l'ensemble des données à conserver (données rémanentes), relatives par exemple à des alarmes, à des tendances, à des historiques, à des ordres de conduite d'un opérateur, etc dans un petit nombre seulement des objets du programme. Il s'agit par conséquent de répercuter les changements intervenus sur les données rémanentes de ces quelques objets du premier programme exécutés par le premier processeur, dans les quelques objets répliques du second programme exécutés par le second processeur, sans que tous les objets du second programme soient mis en oeuvre. En particulier, Il est souhaitable, lors du fonctionnement normal de l'installation de contrôle/commande, que seuls les objets du second programmes encapsulant des données rémanentes soient exécutés en parallèle avec les objets du premier programme encapsulant de tels données rémanentes de manière à réduire la charge de traitement du second processeur tout en garantissant une continuité de service en cas de défaillance survenant au niveau du premier processeur. Le gain de réplication doit donc être un objet.

Par ailleurs, il est souhaitable d'atteindre cet objectif sans remettre en cause la structure existante des objets du premier programme.

A cet effet, l'invention a pour objet un système logiciel à objets, caractérisé en ce que le moyen de mise à jour comprend une première messagerie dynamique d'objet exploitée par les premiers objets, une seconde messagerie dynamique d'objet exploitée par les seconds objets, et en ce qu'il est prévu dans la première messagerie, en plus d'un moyen d'adressage destiné à chaîner dynamiquement l'exécution d'un premier objet appelant avec celle d'un autre premier objet appelé référencé dans un message d'appel d'objet par ledit premier objet appelant, un moyen de contrôle agencé pour exécuter, à partir de chaque message d'appel d'objet, les opérations suivantes :
- a) comparaison d'une information de marquage dérivée du premier objet référencé dans le message d'appel d'objet avec une information de référence pour détecter que l'objet référencé est ou n'est pas un objet répliqué, et
- b) en réponse à la détection d'un objet marqué, transfert du message d'appel d'objet vers la seconde messagerie dynamique par l'intermédiaire du réseau de communication en vue de l'exécution par le second processeur et par l'intermédiaire de la seconde messagerie, du second objet réplique du premier objet référencé dans le message d'appel d'objet transféré.

Selon l'invention, les objets encapsulant des données rémanentes sont marqués et le premier mécanisme de messagerie d'objet est agencé pour discriminer les messages destinés à de tels objets marqués. Ces messages sont transformés en messages réseau qui sont transmis vers le second processeur pour activer les répliques des objets encapsulant des données rémanentes. Les autres répliques d'objets présentes dans le second processeur ne sont normalement pas exécutées de sorte que la charge du second processeur est diminuée lors du fonctionnement normal de l'installation de contrôle/commande. Les procédures supplémentaires de gestion du transfert de messages entre processeurs restent cantonnées dans la structure des mécanismes de messagerie dynamique (existants sur le marché mais modifiées) et non dispersées sur l'ensemble des objets du premier programme de sorte que l'invention peut s'appliquer à un programme à objets déjà existant sans remettre en cause son code source.

D'autres caractéristiques et avantages de l'invention apparaîtront à la lecture de la description qui suit d'un exemple de réalisation de l'invention en référence aux dessins.
- La figure 1 représente schématiquement une installation de contrôle/commande à architecture redondante commandée par un système logiciel à objets conforme à l'invention.
- La figure 2 est un organigramme illustrant le fonctionnement du moyen de contrôle du mécanisme de messagerie d'objet selon l'invention.

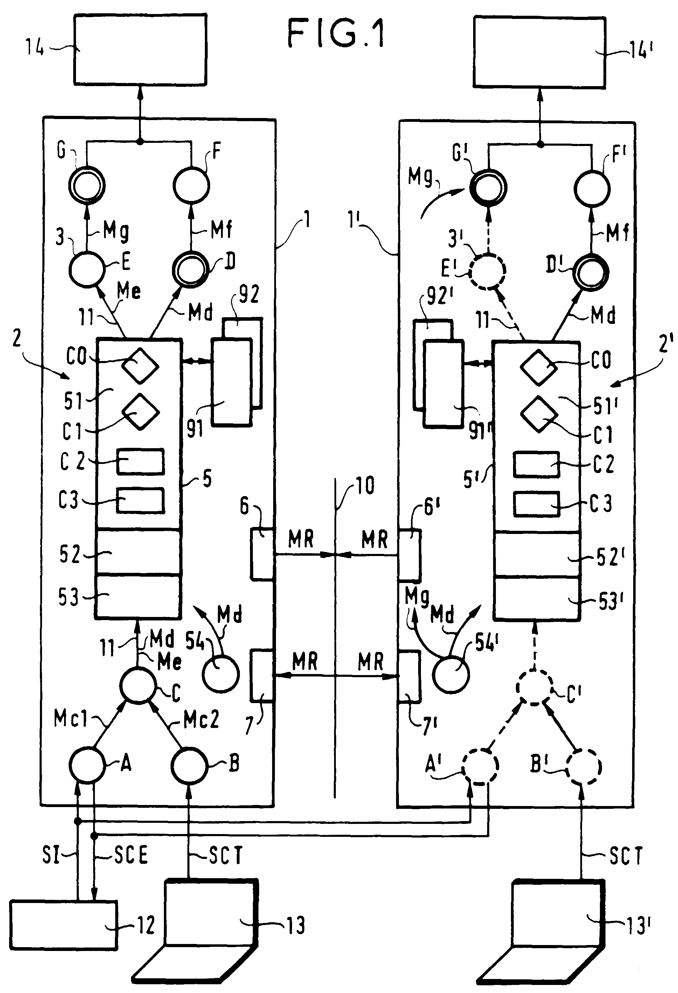

En se reportant à la figure 1, un système logiciel à objets 2 conforme à l'invention est montré comprenant plusieurs objets logiciels 3 résidant dans une mémoire d'un processeur 1. Le processeur 1 qui est un ordinateur classique en soi, fait partie d'un ensemble plus vaste constituant une installation de contrôle/commande à architecture redondante, telle qu'une installation de contrôle/commande pour salle de commande d'un équipement industriel. Le système logiciel à objets 2 assure, au niveau supervision, l'acquisition de signaux d'information numérisés SI provenant d'un équipement extérieur 12 et l'envoi de signaux de commande équipement SCE vers cet équipement, par l'intermédiaire d'objets logiciels d'acquisition tel que A. Il assure aussi un traitement sur de tels signaux d'information numérisés SI par l'intermédiaire d'autres objets logiciels tel que C. Il peut prendre en compte des signaux de commande terminal SCT provenant d'un opérateur par l'intermédiaire d'objets logiciels d'interface homme/machine tel que B et d'un terminal de commande 13 mettant en oeuvre de tels objets. Il assure la gestion d'alarmes à partir de la surveillance du résultat des traitements par l'intermédiaire d'objets logiciels d'alarme tel que E et l'affichage ou la signalisation de conditions d'alarme par l'intermédiaire de premiers objets logiciels d'affichage tel que G commandant un terminal d'affichage 14. Il assure aussi la conservation de résultats de traitement dans des objets logiciels d'historique tel que D et l'affichage de l'évolution des résultats de traitement par l'intermédiaire de seconds objets logiciels d'affichage tel que F qui commandent aussi le terminal d'affichage 14.

Le processeur 1 est relié au travers d'un réseau de communication numérique asynchrone 10 à un autre processeur 1' ayant aussi une mémoire dans laquelle réside une réplique 2' du système logiciel à objets 2. Le réseau de communication peut être le réseau Ethernet. Le système logiciel 2' est lui-même constitué d'objets logiciels 3'. Sur cette figure, l'équipement 12 est relié en parallèle au processeur 1 et au processeur 1', lequel est relié à un terminal d'affichage 14' et à un terminal de commande 13'. Les objets 3' sont des répliques des objets 3 et comprennent des objets logiciels d'acquisition tel que A', des objets logiciel interface homme/machine tel que B', des objets logiciels de traitement tel que C', des objets logiciels d'alarme tel que E', des objets logiciels d'historique tel que D' et des objets logiciels d'affichage tels que G' et F'.

Les objets A,B,C,D,E,F,G communiquent entre eux par messages de façon classique en programmation à objet, les messages ayant une structure définie par le langage de programmation à objets utilisé. Nous appellerons par la suite ces messages, des messages d'objets. La circulation de messages entre objets obéit aux liens fonctionnels de dépendance entre ces objets qui sont représentés par des flèches 11.

Chaque message d'objet M engendré par un objet d'origine 3 inclut au moins un identificateur local d'objet identifiant un objet destinataire d'un tel message et un identificateur de méthode au sens classique de la programmation à objets. Le message d'objet M peut inclure d'autres paramètres, telles que des données à prendre en compte par la méthode. Selon l'invention le message est d'abord fourni à un mécanisme de messagerie d'objet 5. Ce mécanisme de messagerie 5 fait partie du système logiciel 2. Classiquement, le rôle d'un mécanisme de messagerie d'objet est d'établir un lien entre l'identificateur local d'une méthode (sélecteur) et le (pointeur sur le) code exécutable de la méthode en fonction de l'identificateur de l'objet destinataire (pointeur sur les données de l'objet) inclus dans le message d'objet. Les mécanismes de messagerie d'objet sont bien connus. On distingue parmi ceux-ci les mécanismes de messagerie dits statiques qui établissent les liens à la compilation du code source des objets et les mécanismes de messagerie dits dynamiques qui établissent les liens à l'exécution. Ces derniers possèdent une structure logicielle (appelée "Run Time") et qui est activée à chaque envoi d'un message par un objet. Par la suite, nous ferons référence uniquement à un mécanisme de messagerie d'objet dynamique. A titre d'exemple, le compilateur du langage de programmation "OBJECTIVE-C" distribué par la société Stepstone ou le compilateur du langage "SMALLTALK" de la société Xerox, construit un mécanisme de messagerie dynamique. Pour faciliter la compréhension de l'invention, il est rappelé que la communication par messages entre objets implique l'appel d'un objet X par un objet Y et la réponse de l'objet X à l'objet Y. L'appel d'un objet X par un objet Y est explicite et peut être vu de la syntaxe même du code source de l'objet Y: en langage OBJECTIVE-C, [X nom-de-méthode: arguments] dans le code source de l'objet Y dénote l'envoi d'un message par Y à X. La réponse de l'objet X à l'objet Y peut se faire soit par un appel explicite ([Y nom-de-méthode: arguments]) soit par un appel implicite par l'intermédiaire d'une pile d'appel de fonction (réponse= [X nom-de-méthode: arguments]). Par la suite, on considère que les objets logiciels 3 effectuent des réponses explicites.

Selon un premier aspect de l'invention, un mécanisme de messagerie dynamique est enrichi pour discriminer, lors de l'exécution du système logiciel dans le premier processeur, les messages qui sont adressés à certains objets 3 du système logiciel 2 comme les objets encapsulant des données rémanentes. La fonction de discrimination de messages n'affecte pas le code source des objets logiciels 3. Cette fonction doit par ailleurs pouvoir être mise en oeuvre pour chaque message d'objet M engendré par un objet 3. Sur la figure 1, un mécanisme de messagerie 5 est montré interposé, sur le trajet 11 de messages d'objet, entre l'objet C qui engendre des messages d'objet Md, Me et les objets D et E à qui sont adressés respectivement ces messages d'objet. L'adressage de chaque message est réalisé dans la section d'adressage 53 du mécanisme de messagerie 5. La section d'adressage 53 est classique de sorte qu'il est inutile de la décrire plus.

Selon un second aspect de l'invention, chaque objet 3 possède une marque identifiable par le mécanisme de messagerie 5 à partir de l'identificateur local de cet objet. Cette marque peut être un attribut de l'objet qui a une valeur particulière. Cet attribut peut être hérité de la racine de la hiérarchie d'héritage des objets 3 par l'intermédiaire d'un mécanisme d'héritage d'attributs de classes d'objets, classique en soi. Il sera appelé par la suite attribut de réplication. La valeur initiale d'un attribut de réplication pour un objet particulier est fixée de préférence au moment de l'écriture du code source de cet objet mais peut facilement être modifiée lors de la configuration du système logiciel ou au cours de son exécution, par exemple par cet objet. Selon l'invention, les objets 3 (encapsulant des données rémanentes) ayant une réplique 3' devant être activée dans le processeur 1' possèdent un attribut de réplication ayant comme valeur une valeur particulière qui sert de référence. On considère que les objets D et G sur la figure 1 sont désignés, à titre d'exemple, comme objets répliqués, c'est à dire comme objets 3 du processeur 1 ayant une réplique 3' devant être activée dans le processeur 1'.

Le mécanisme de messagerie 5 inclut aussi une section de contrôle 51 placée en amont de la section d'adressage 53. L'exécution du code de la section de contrôle 51 précède donc toujours l'exécution du code de la section d'adressage 53. La section de contrôle 51 est agencée pour réaliser les traitements suivants:
- comparer, dans un module de comparaison C1, l'attribut de réplication de l'objet destinataire du message reçu avec la valeur de référence de réplication, la valeur de l'attribut de réplication de l'objet en question étant obtenue à partir de l'identificateur local de l'objet inclus dans le message reçu;
- détecter, dans un module de détection C2, si l'identificateur local de méthode inclus dans le message reçu est présent dans une première table 91 contenant des identificateurs locaux de méthode en correspondance avec des identificateurs globaux de méthodes et des descripteurs de format des arguments de méthode, et fournir le cas échéant un identificateur global de méthode qui correspond à l'identificateur local de méthode présent dans la première table ainsi que le descripteur de format correspondant;
- détecter, dans un module de détection C3, si l'identificateur local de l'objet inclus dans le message est présent dans une seconde table 92 contenant des identificateurs locaux d'objet en correspondance avec des identificateurs globaux d'objet, et fournir le cas échéant un identificateur global d'objet qui correspond à l'identificateur local d'objet présent dans la seconde table.

Le mécanisme de messagerie 5 inclut encore un module d'émission 52 pour former un message réseau MR dérivé du message objet M reçu et le transmettre à travers le réseau de communication 10 au processeur 1'.

Le module d'émission de messages réseau 52 est agencé pour construire un message réseau MR contenant l'identificateur global d'objet et l'identificateur global de méthode fournis par les modules de détection C2 et C3. Il est aussi agencé pour construire un message réseau contenant éventuellement des arguments de la méthode codés en utilisant le descripteur de format fourni par le module de détection C2. Le module d'émission 52 exploite une interface réseau d'émission 6 pour envoyer le message réseau MR sur le réseau de communication 10 qui le diffuse vers les processeurs 1 et 1' reliés au réseau.

Il est souvent préférable, parce que plus simple de disposer dans les deux systèmes logiciels 2 et 2' de mécanismes de messagerie d'objet 5 et 5' identiques. Le mécanisme de messagerie 5' comporte donc aussi une section d'adressage 53', un section de contrôle 51' incluant un comparateur C1 et des modules de détection C2,C3 exploitant des tables de correspondance 91',92', un module d'émission 52'. Le système logiciel 2' comporte aussi un module logiciel de réception de messages réseau 54' (qui est un objet logiciel particulier) exploitant une interface réseau de réception 7'. L'interface réseau 7' capture les messages réseau MR envoyés sur le réseau de communication 10 et passe ces messages au module de réception 54'. Le module de réception 54' est agencé pour extraire d'un message réseau capturé MR un identificateur global d'objet, un identificateur global de méthode et éventuellement un descripteur de format. Il récupère, à partir de l'inspection de tables de correspondance 91' et 92' similaires aux tables 91 et 92, un identificateur local d'objet, un identificateur local de méthode et éventuellement les arguments de la méthode par l'intermédiaire du descripteur de format. Il forme ensuite un message d'objet M' et adresse ce message d'objet à la réplique d'objet destinataire 3' par l'intermédiaire du mécanisme de messagerie d'objet 5'. Il est entendu que identificateurs locaux d'objet et de méthode dans les tables 91' et 92' sont spécifiques au processeur 1' et ceux des tables 91 et 92 sont spécifiques au processeur 1. Les tables 91, 92, 91', 92' peuvent être construites au moment de la compilation, après la compilation ou à l'initialisation des systèmes logiciels 2 et 2'.

Il est généralement souhaitable de garantir que dans les deux processeurs 1 et 1', les objets 3 et leur répliques 3' reçoivent les mêmes messages selon le même ordre (condition d'ordre total et causal) quelque soit l'activité des deux systèmes logiciels 2 et 2'. Les messages d'objet, capturés par le mécanisme de messagerie 5 et envoyés au processeur 1' sous forme de messages réseau, ne sont pas consécutivement adressés aux objets 3 destinataires de ces messages, mais transitent d'abord par le réseau de communication 10 pour être temporisés en entrée de chaque processeur 1 et 1' par un protocole de diffusion atomique et ordonné. A cet effet, le système logiciel 2 comporte aussi un module logiciel de réception de messages réseau 54 exploitant une interface réseau de réception 7. L'interface réseau 7 capture les messages réseau MR envoyés sur le réseau de communication 10 et passe ces messages au module de réception 54. Le module de réception 54 est agencé pour extraire d'un message réseau MR un identificateur global d'objet, un identificateur global de méthode et éventuellement un descripteur de format. Il récupère, à partir de l'inspection de tables de correspondance 91 et 92 un identificateur local d'objet, un identificateur local de méthode et éventuellement les arguments de la méthode par l'intermédiaire du descripteur de format. Il forme ensuite un message d'objet M et adresse ce message d'objet à l'objet destinataire 3 identifié par l'identificateur local d'objet par l'intermédiaire du mécanisme de messagerie d'objet 5. Le protocole de diffusion atomique et ordonné peut être implémenté dans le code source des modules d'émission et de réception de messages réseau 52, 54, 54' en utilisant les fonctions "ABCATS" (ou "CBCAST") du système ISIS vendu par Isis Distributed Systems. Pour éviter le bouclage à l'intérieur du mécanisme de messagerie 5 lors du retour d'un message d'objet M fourni par le module de réception 54, la section de contrôle 51 du mécanisme de messagerie 5 est agencée pour comparer, dans un comparateur CO placé en amont du comparateur C1, si un drapeau (une variable booléenne) est égale à ou différente d'une valeur de référence d'inhibition de la diffusion. Par la suite, on dira que le drapeau est levé si sa valeur est égale à la valeur de référence d'inhibition et baissé dans le cas contraire.

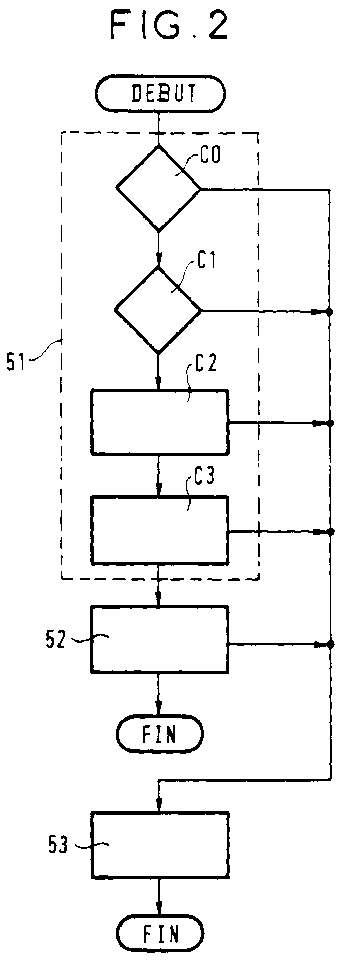

En se reportant maintenant à la figure 2, le fonctionnement du mécanisme de messagerie 5 et plus particulièrement de sa section de contrôle 51 est le suivant. En entrée du mécanisme de messagerie 5, le drapeau est testé dans le comparateur C0. Si le drapeau est baissé, le traitement se poursuit dans la section d'adressage 53. S'il est levé, l'attribut de réplication de l'objet destinataire du message est testé dans le comparateur C1. Si l'attribut de réplication de cet objet à une valeur différente de la valeur de référence de réplication, le traitement se poursuit dans la section d'adressage 53. Dans le cas contraire, le traitement se poursuit dans le module de détection C2. Le module de détection explore la table 91 pour détecter si l'identificateur local de méthode y est présent. Dans ce cas, un identificateur global de méthode est extrait de la table 91 et un descripteur de format éventuellement, et le traitement se poursuit dans le module de détection C3. La table 91 peut contenir seulement des identificateurs de méthode modifiante. Une méthode modifiante est une méthode modifiant les données de l'objet auquel elle est appliquée. La discrimination des messages sur les méthodes modifiantes permet de réduire le trafic utile de messages réseau sur le réseau de communication 10. Dans le cas où l'identificateur local de méthode n'est pas présent dans la table 91, le traitement se poursuit dans la section d'adressage 53. Le module de détection C3 explore la table 92 pour détecter si l'identificateur local d'objet y est présent. Dans ce cas, un identificateur global d'objet est extrait de la table 92 et le traitement se poursuit dans le module d'émission 52 qui forme le message réseau MR. Le mécanisme de messagerie 5 comporte donc deux sorties qui sont la section d'adressage 53 et le module d'émission de messages réseau 52.

Le drapeau est normalement levé à l'initialisation du système logiciel 2 mais il est baissé par le module de réception de messages réseau 54 quand ce dernier appelle le mécanisme de messagerie 5 pour envoyer à un objet un message d'objet dérivé du message réseau reçu. Ceci évite le rebouclage dans la section de contrôle 51. Le drapeau est levé aussi par le module de réception de messages réseau 54 de sorte que le mécanisme de messagerie peut de nouveau discriminer les messages d'objet à prendre en compte. L'ensemble des caractéristiques du mécanisme de messagerie 5 se retrouve bien entendu dans le mécanisme de messagerie 5'. Il en est de même pour les modules de réception de messages réseau 54 et 54'.

Nous allons maintenant décrire le fonctionnement global du système logiciel 2 et du système logiciel 2' en prenant le cas d'un échange de message entre l'objet C et l'objet D qui possède un attribut de réplication ayant comme valeur la valeur de référence de réplication.

L'objet C engendre un message Md incluant un identificateur d'objet identifiant l'objet D et un identificateur de méthode identifiant une méthode modifiante. Le mécanisme de messagerie 5 est mis en oeuvre. Le traitement se poursuit successivement dans les comparateurs C0 et C1, puis dans les modules de détection C2, C3 et enfin dans le module d'émission de message réseau 53. Un message réseau MR est envoyé sur le réseau de communication 10 par l'interface d'émission 6.

En réponse à la réception et à la prise en compte du message réseau MR, les interfaces de réception de messages réseau 7 et 7' passent le message réseau MR respectivement au module de réception de messages réseau 54 et au module de réception de messages réseau 54' en exploitant le protocole de diffusion atomique et ordonné. Les modules de réception de message réseau 54, 54' baissent les drapeaux des mécanismes de messagerie 5, 5'. Ils envoient ensuite chacun, un message objet Md à leur mécanisme de messagerie respectif. La section de contrôle 51 du mécanisme de messagerie 5 est de nouveau mise en oeuvre pour le message Md. Le traitement se poursuit alors dans le comparateur C0 puis dans la section d'adressage 53 du fait que le drapeau est baissé. La section d'adressage 53 adresse le message Md à l'objet D. De la même façon, dans la section de contrôle 51' le traitement se poursuit dans le comparateur C0 puis dans la section d'adressage 53', du fait que le drapeau est baissé.

En réponse au message Md, l'objet D fait appel à son tour au mécanisme de messagerie 5 pour envoyer un message Mf incluant un identificateur d'objet identifiant l'objet F et un identificateur de méthode. Le drapeau étant toujours baissé, le traitement dans le mécanisme de messagerie 5 se poursuit d'abord dans le comparateur C0 puis dans la section d'adressage 53 (que l'objet F soit ou non déclaré répliqué). Un traitement identique est réalisé par le mécanisme de messagerie 5' pour les objets D' et F'. Les drapeaux sont levés dans les modules de réception de messages réseau 54 et 54' lorsque le code du mécanisme de messagerie 5 respectivement 5' est complètement exécuté pour ce qui concerne l'appel de l'objet D respectivement D'. La levée du drapeau par le module de réception 54 intervient normalement après l'envoi du message Mf par l'objet D à l'objet F. Pour le message Me engendré par l'objet C à destination de l'objet E, la section de contrôle 51 du mécanisme de messagerie 5 est de nouveau mise en oeuvre. Le traitement se poursuit dans les comparateurs C0, C1 et dans la section d'adressage 53 du fait que l'objet E n'est pas un objet répliqué.

En réponse à la prise en compte du message Me, l'objet E engendre le message Mg qui est destiné à un objet répliqué G. De nouveau, dans le mécanisme de messagerie 5, le traitement se poursuivra dans les comparateurs C0 et C1, dans les modules de détection C2 et C3 et dans le module d'émission de message réseau 52. Un nouveau message réseau MR sera envoyé sur le réseau de communication 10.

Dans la réplique 2' du système logiciel 2, seules les répliques D',F'et G' des objets D,F et G sont normalement activées par le mécanisme de messagerie 5' ce qui limite la charge de traitement du processeur 1'. Les objets B', C', E' peuvent néanmoins être activés par l'intermédiaire du terminal de commande 13' qui agit sur l'objet B'. Il est alors avantageux que le mécanisme de messagerie 5' de la réplique 2' du système logiciel 2 comporte aussi un module d'émission de messages réseau 52' exploitant une interface d'émission réseau 6'. Dans ce cas, la diffusion de messages réseau sur le réseau de communication 10 se fait depuis le module d'émission de messages réseau 52'.

Il peut exister des situations où l'ordre des messages d'objet reçus par un objet 3 diffère de l'ordre des messages d'objet reçus par une réplique 3' de cet objet 3. En prenant le cas où l'objet D reçoit le message d'objet Md de l'objet C et un message d'objet Md' de l'objet B et si de plus l'objet C est déclaré répliqué, il est possible que l'ordre de prise en compte des messages Md et Md' par le mécanisme de messagerie 5 diffère de l'ordre de prise en compte des mêmes messages par le mécanisme de messagerie 5' car le drapeau inhibe l'emploi de la diffusion atomique et ordonnée lors de l'envoi du message Md de l'objet C à l'objet D. Cela peut causer des inversions de messages sur les objets D et D' si il peut y avoir préemption des traitements. Pour résoudre ce problème, on peut prévoir dans chaque module de réception 54 de messages réseau une commande pour empêcher toute préemption du programmateur des traitements d'objets pendant le traitement de la séquence d'objets C-D-F (appelée communément "thread"). A cet effet, chaque module de réception de messages réseau est agencé pour inhiber l'ordonnateur avant l'appel au mécanisme de messagerie et lever l'inhibition après cet appel. Il est à noter, que des interactions complexes entre objets peuvent conduire à déclarer des objets comme répliqués alors qu'ils ne contiennent pas de données rémanentes afin de simplifier le trafic sur le réseau de communication et éviter les problèmes d'ordonnancement de messages entre objets répliqués.

Le système logiciel à objets selon l'invention permet de commander une installation à architecture redondante selon une technique de redondance semi-active sans avoir à remettre en cause la structure des objets logiciels. L'invention peut par conséquent s'appliquer facilement à des systèmes logiciels à objets existants. Ainsi, pour un système logiciel à objets existant réalisé à partir du langage "OBJECTIVE-C", il suffit, d'une part, d'inclure dans le code de la messagerie dynamique produite par le compilateur OBJECTIVE-C quelques instructions en code source OBJECTIVE-C pour réaliser la section de contrôle 51 et réaliser les modules d'émission et de réception de messages réseau 52 et 54 en utilisant les primitives du système ISIS. Il est évident que l'invention peut s'appliquer à une installation à structure redondante comprenant plus de deux processeurs, chaque processeurs ayant un mécanisme de messagerie et des modules de réception et d'émission de messages réseau.

Bien entendu, l'invention n'est pas limitée à l'exemple de réalisation ci dessus décrit, et on pourra prévoir d'autres variantes sans pour cela sortir du cadre de l'invention telle que définie par les revendications.

## Revendications

1. Un système logiciel pour installation de contrôle/commande à architecture redondante comprenant un premier processeur (1) relié par un réseau de communication (10) à un second processeur (1'), le système logiciel comprenant un premier programme à objets constitué de premiers objets destinés à être exécutés par le premier processeur, un second programme à objets constitué de second objets répliques de certains au moins des premiers objets et destinés à être exécutés par le second processeur, les seconds objets et lesdits certains premiers objets encapsulant des données, un moyen de mise à jour étant prévu pour maintenir une cohérence entre les données des seconds objets et les données desdits certains premiers objets lors de l'exécution desdits certains premiers objets, caractérisé en ce que le moyen de mise à jour comprend une première messagerie dynamique d'objet (2) exploitée par les premiers objets, une seconde messagerie dynamique d'objet (2') exploitée par les seconds objets, et en ce qu'il est prévu dans la première messagerie, en plus d'un moyen d'adressage (53) destiné à chaîner dynamiquement l'exécution d'un premier objet appelant avec celle d'un autre premier objet appelé référencé dans un message d'appel d'objet par ledit premier objet appelant, un moyen (51) de contrôle agencé pour exécuter, à partir de chaque message d'appel d'objet, les opérations suivantes :
- a) comparaison (C1) d'une information de marquage dérivée du premier objet référencé dans le message d'appel d'objet avec une information de référence pour détecter que l'objet référencé est ou n'est pas un objet répliqué, et
- b) en réponse à la détection d'un objet marqué, transfert (52) du message d'appel d'objet vers la seconde messagerie dynamique par l'intermédiaire du réseau de communication en vue de l'exécution par le second processeur et par l'intermédiaire de la seconde messagerie, du second objet réplique du premier objet référencé dans le message d'appel d'objet transféré.

2. Le système logiciel selon la revendication 1, dans lequel le moyen de contrôle (51) est agencé en outre pour ne pas exécuter au moins l'opération b) pour un nouveau message d'appel d'objet tant qu'une condition d'inhibition (C0) est satisfaite suite à un transfert d'un précédent message d'appel d'objet sur le réseau de communication à l'origine du nouveau message d'appel d'objet.

3. Le système logiciel selon la revendication 2, dans lequel chaque message d'appel d'objet inclut un identificateur de méthode de l'objet appelé et dans lequel il est prévu une table (91) contenant des identificateurs de méthodes modifiantes exploitée par le moyen de contrôle, le moyen de contrôle étant en outre agencé pour ne pas transférer un message d'appel d'objet sur le réseau de communication quand l'identificateur de méthode inclus dans ce message d'objet n'est pas présent dans ladite table.

4. Le système logiciel selon l'une des revendications précédentes, dans lequel l'information de marquage est une valeur particulière d'un attribut de l'objet appelé.

5. Le système logiciel selon l'une des revendications précédentes, dans lequel il est prévu que le réseau de communication est exploité selon un protocole de diffusion atomique et ordonné des messages d'appel d'objet depuis la première messagerie d'objet vers celle-ci et vers la seconde messagerie d'objet.

## Patentansprüche

1. Softwaresystem für eine Kontroll- und Steuereinrichtung mit redundanter Architektur, die einen ersten Prozessor (1) und einen daran über ein Vermittlungsnetz (10) angeschlossenen zweiten Prozessor (1') besitzt, wobei das Softwaresystem ein erstes Programm mit Objekten enthält, das aus ersten Objekten besteht, welche vom ersten Prozessor durchgeführt werden sollen, ein zweites Programm mit Objekten bestehend aus zweiten Objekten, die Repliken mindestens bestimmter der ersten Objekte sind und vom zweiten Prozessor durchgeführt werden sollen, wobei die zweiten Objekte und die bestimmten ersten Objekte Daten einschließen und wobei ein Aktualisierungsmittel vorgesehen ist, um eine Kohärenz zwischen den Daten der zweiten Objekte und den Daten der bestimmten ersten Objekte während der Durchführung der bestimmten ersten Objekte aufrechtzuerhalten, dadurch gekennzeichnet, daß das Aktualisierungsmittel einen ersten dynamischen Objekttransfermechanismus (2), der von den ersten Objekten betrieben wird, und einen zweiten dynamischen Objekttransfermechanismus (2') besitzt, der von den zweiten Objekten betrieben wird, und daß im ersten Transfermechanismus außer einem Adressiermittel (53), das die Durchführung eines ersten rufenden Objekts mit der eines anderen ersten Objekts, Bezugsobjekt genannt, in einer Nachricht des Rufs nach einem Objekt durch das erste rufende Objekt verketten soll, ein Kontrollmittel (51) vorgesehen ist, das ausgehend von jeder Objektrufnachricht die folgenden Operationen durchführen kann:
a) Vergleich (C1) einer Markierinformation, die vom ersten Bezugsobjekt in der Objektrufnachricht abgeleitet wurde, mit einer Bezugsinformation, um festzustellen, ob das Bezugsobjekt ein repliziertes Objekt ist oder nicht,
b) Transfer (52) der Objektrufnachricht zum zweiten dynamischen Transfermechanismus über das Vermittlungsnetz als Antwort auf die Überprüfung eines markierten Objekts, um im zweiten Prozessor und über den zweiten Transfermechanismus das zweite Objekt auszuführen, das eine Replik des ersten Bezugsobjekts in der transferierten Objektrufnachricht ist.

2. Softwaresystem nach Anspruch 1, in dem das Kontrollmittel (51) außerdem so ausgebildet ist, daß es solange zumindest die Operation (b) für eine neue Objektrufnachricht nicht durchführt, als eine Sperrbedingung (CO) nach einem Transfer einer vorhergehenden Objektrufnachricht auf das Vermittlungsnetz aufgrund der neuen Objektrufnachricht erfüllt ist.

3. Softwaresystem nach Anspruch 2, in dem jede Objektrufnachricht einen Methodenidentifizierer des gerufenen Objekts enthält, und in dem eine Tabelle (91) mit Identifizierern von modifizierenden Methoden vorgesehen ist, die von dem Kontrollmittel ausgewertet wird, wobei das Kontrollmittel außerdem so ausgebildet ist, daß es eine Objektrufnachricht auf das Vermittlungsnetz nicht überträgt, wenn der in dieser Objektnachricht enthaltene Methodenidentifizierer in der Tabelle nicht vorliegt.

4. Softwaresystem nach einem der vorhergehenden Ansprüche, in dem die Markierinformation einen besonderen Wert eines Attributs des gerufenen Objekts besitzt.

5. Softwaresystem nach einem der vorhergehenden Ansprüche, in dem vorgesehen ist, daß das Vermittlungsnetz gemäß einem atomischen und geordneten Programm der Verteilung der Objektrufnachrichten vom ersten Objekttransfermechanismus zu diesem und zum zweiten Objekttransfermechanismus betrieben wird.

## Claims

1. A software system for a monitoring/control installation of redundant architecture and comprising a first processor (1) connected to a second processor (1') via a communications network (10), the software system comprising a first object-oriented program constituted by first objects to be run by the first processor, a second object-oriented program constituted by second objects that are replicas of at least certain first objects and that are to be run by the second processor, the second objects and said certain first objects encapsulating data, updating means being provided for maintaining consistency between the data of the second objects and the data of said certain first objects during running of said certain first objects, said software system being characterized in that the updating means comprise a first dynamic object messaging mechanism (5) used by the first objects, and a second dynamic object messaging mechanism (5') used by the second objects, and in that, in the first messaging mechanism, in addition to addressing means (53) for dynamically chaining the running of a calling first object with the running of a called other first object referenced in an object call message by said calling first object, monitoring means (51) are provided organized for performing the following operations on the basis of each object call message:
a) comparing (C1) marking information derived from the first object referenced in the object call message with reference information to detect whether or not the referenced first object is a replicated object; and
b) in response to a marked object being detected, transferring (52) the object call message to the second dynamic messaging mechanism via the communications network so that the second object that is the replica of the first object referenced in the transferred object call message can be run by the second processor and via the second messaging mechanism.

2. A software system according to claim 1, in which the monitoring means (51) are further organized so that they do not run at least operation b) for a new object call message provided that an inhibition condition (CO) is satisfied following transfer of a preceding object call message over the communications network originating the new object call message.

3. A software system according to claim 2, in which each object call message includes a method identifier of the called object, and in which a table (91) is provided containing modifying method identifiers and used by the monitoring means, the monitoring means further being organized so as not to transfer an object call message over the communications network when the method identifier included in that object call message is not present is said table.

4. A software system according to any preceding claim, in which the marking information is a particular value of an attribute of the called object.

5. A software system according to any preceding claim, in which the communications network is provided to be used in accordance with an ordered and atomic broadcast protocol for the object call messages from the first object messaging mechanism to the first object messaging mechanism and to the second object messaging mechanism.
